# EUROPÄISCHE PATENTSCHRIFT

(11) **EP 0 424 656 B1**
(45) Veröffentlichungstag und Bekanntmachung des Hinweises auf die Patenterteilung: **25.05.1994**
(21) Anmeldenummer: 90117586.9
(22) Anmeldetag: 12.09.1990
(51) Int. Cl.: G11B 27/32, G11B 27/34, G11B 27/00, G11B 15/02, G11B 27/11

(54) **Videorecorder mit einer Einrichtung zur Abspeicherung des Inhaltsverzeichnisses eines aus einer Vielzahl von Magnetbandkassetten bestehenden Kassettenmagazins und zur Numerierung dieser Magnetbandkassetten**
Videorecorder comprising a device for storing the table of contents of a cassette magazine containing a plurality of magnetic tape cassettes and for numbering these magnetic tape cassettes
Magnétoscope avec un dispositif pour enregistrer la table de matières d'un magasin de cassettes pour plusieurs cassettes à bande magnétique et pour numéroter ces cassettes à bande magnétique

(30) Priorität: 24.10.1989 DE 3935292
(43) Veröffentlichungstag der Anmeldung: 02.05.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Gwiosda, Horst, Grundig E.M.V., Max Grundig, D-8510 Fürth/Bay (DE); Mahmud, Shabaz, Grundig E.M.V., Max Grundig, D-8510 Fürth/Bay (DE); Welz, Gerhard, Grundig E.M.V., Max Grundig, D-8510 Fürth/Bay (DE)

(56) Entgegenhaltungen:
- EP-A- 0 257 534
- EP-A- 0 291 934
- EP-A- 0 363 653
- BE-A- 886 928
- DE-A- 3 621 263
- US-A- 4 703 311
- JP-A-1 213853*TOSHIBA CORP.* 28-08-1989,&&PATENT ABSTRACTS OF JAPAN, Vol. 13,no 524 *P-964**3872*22-11-1989,
- PATENT ABSTRACTS OF JAPAN vol. 13, no. 329 (P-904)(3677) 25 Juli 1989,& JP-A-1092953 (HITACHI LTD.) 12 April 1989,
- PATENT ABSTRACTS OF JAPAN vol. 9, no. 259 (P-397)(1982) 17 Oktober 1985,& JP-A-60 107787 (TOSHIBA CORP.) 13 Juni 1985,
- SMPTE JOURNAL. vol. 88, no. 4, April 1979, US Seiten 221 - 223; KAZAMA et al.:"Automatic Storage and Retrieval of Videotaped Programs"*sehe mittelste Spalte,Zeile 18- rechte Spalte,Zeile 14
- PATENT ABSTRACTS OF JAPAN vol. 12, no. 90 (P-679)(2937) 24 März 1988,& JP-A-62 223877 (VICTOR COMPANY OF JAPAN LTD.) 01 Oktober 1987,
- PATENT ABSTRACTS OF JAPAN vol. 7, no. 194 (E-195)(1339) 24 August 1983,& JP-A-58 094287 (HITACHI SEISAKUSHO K.K.) 04 Juni 1983,
- PATENT ABSTRACTS OF JAPAN vol. 14, no. 296 (P-1067)(4239) 26 Juni 1990,& JP-A-02 09875 (HITACHI LTD.) 30 März 1990,

## Beschreibung

Die Erfindung betrifft einen Videorecorder mit einer Einrichtung zur Abspeicherung des Inhaltsverzeichnisses eines aus einer Vielzahl von Magnetbandkassetten bestehenden Kassettenmagazins mit den im Oberbegriff des Anspruchs 1 angegebenen Merkmalen.

Ein derartiger Videorecorder ist aus der JP-A-60 107 787 bekannt. Ein aus der EP-A2 0 257 534 bekannter Videorecorder enthält insbesondere einen Speicher, in dem für eine Vielzahl von numerierten Magnetbandkassetten ein Inhaltsverzeichnis in Form von Informationen über die örtliche Lage der aufgezeichneten Programmbeiträge auf dem jeweiligen Band und deren Titel abgespeichert ist. Will nun der Benutzer einen bestimmten Programmbeitrag sehen, so legt er die Magnetbandkassette, auf der der gewünschte Programmbeitrag aufgezeichnet ist, in den Videorecorder ein. Dieser führt einen automatischen Initialisierungslauf durch. Bei diesem Initialisierungslauf aktiviert der Mikrocomputer den Bandantriebsmotor zum kurzzeitigen Vor- und Zurückspulen des Bandes mit erhöhter Geschwindigkeit.

Während dieses Umspulvorganges werden von den Wellen der beiden Bandwickel oder von der Welle eines Bandwickels und der Capstan-Welle Impulse abgeleitet, deren Anzahl pro Zeiteinheit von der Drehgeschwindigkeit der zugehörigen Welle abhängt, und dem Mikrocomputer zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher ab. Der Benutzer ruft mittels der Bedientastatur das der eingelegten Magnetbandkassette zugehörige Inhaltsverzeichnis auf. Dieses wird auf dem Bildschirm eines an den Videorecorder angeschlossenen Fernsehempfängers in Tabellenform angezeigt. Der Benutzer wählt mittels der Bedientastatur den gewünschten Programmbeitrag an und betätigt eine Übernahmetaste. Der Mikrocomputer ruft aus dem Speicher den Bandstand des ausgewählten Programmbeitrages (bzw. die Informationen über die örtliche Lage des ausgewählten Programmbeitrages auf dem Band) ab, vergleicht ihn mit dem momentanen Bandstand und steuert einen schnellen Umspulbetrieb zum Auffinden des gewünschten Programmbeitrages auf dem Band.

Ein Nachteil des bekannten Videorecorders besteht darin, daß der Benutzer bei jedem Einlegen einer Kassette in den Videorecorder dem Mikrocomputer des Videorecorders mittels der Bedientastatur die Nummer der Kassette mitteilen muß.

Ein weiterer derartiger Videorecorder, der neben einem Speicher im Videorecorder für eine Vielzahl von Magnetbandkassetten einen Speicher in jeder Magnetbandkassette enthält ist aus dem belgischen Zusatzpatent No. 886.928 bekannt. Im Speicher der Magnetbandkassette kann auch eine Kassettennummer abgespeichert werden. Wird eine mit einer Nummer versehene Magnetbandkassette in den Videorecorder eingelegt, wird der der Kassettennummer entsprechende Speicherbereich im Speicher des Videorecorders angewählt.

Aus der oben genannten Patentanmeldung JP 60-107787 (A) oder der Patentschrift US 4,703,311 ist es darüber hinaus bekannt, eine derartige Kassettennummer in einer Längsspur z.B. Steuerspur des Magnetbandes aufzuzeichnen. Wird dazu die Steuerspur verwendet, so können die Nummern beispielsweise mittels der in dem Aufsatz "VHS VCR WITH INDEX AND ADDRESS SEARCH SYSTEMS", IEEE Transactions on Consumer Electronics, CE-33 (1987) August, No. 3, Seiten 220 - 224, beschriebenen Impulsbreitenmodulation aufgezeichnet werden.

Die bekannten Videorecorder weisen jedoch den Nachteil auf, daß der Benutzer bei der Vergabe von Nummern für Magnetbandkassetten bereits vergebene Nummern beachten muß, um Überschneidungen und das Auftreten von gleich numerierten Magnetbandkassetten zu vermeiden.

Ausgehend von diesem Stand der Technik liegt der Erfindung die Aufgabe zugrunde, einen Videorecorder mit den im Oberbegriff des Anspruchs 1 angegebenen Merkmalen derart weiterzubilden, daß der vorstehend genannte Nachteil nicht mehr auftritt.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst. Vorteilhafte Weiterbildungen der Erfindung ergeben sich aus den Unteransprüchen.

Die Vorteile der Erfindung bestehen insbesondere darin, daß durch die automatische Zuordnung einer freien Nummer der Benutzer beim erstmaligen Einlegen einer Videokassette keine Kenntnis darüber haben muß, weiche Nummern für zuvor mit dem Videorecorder bearbeitete Videokassetten bereits vergeben wurden. Somit ist die mehrfache Vergabe von Nummern ausgeschlossen, wodurch Überschneidungen vermieden werden.

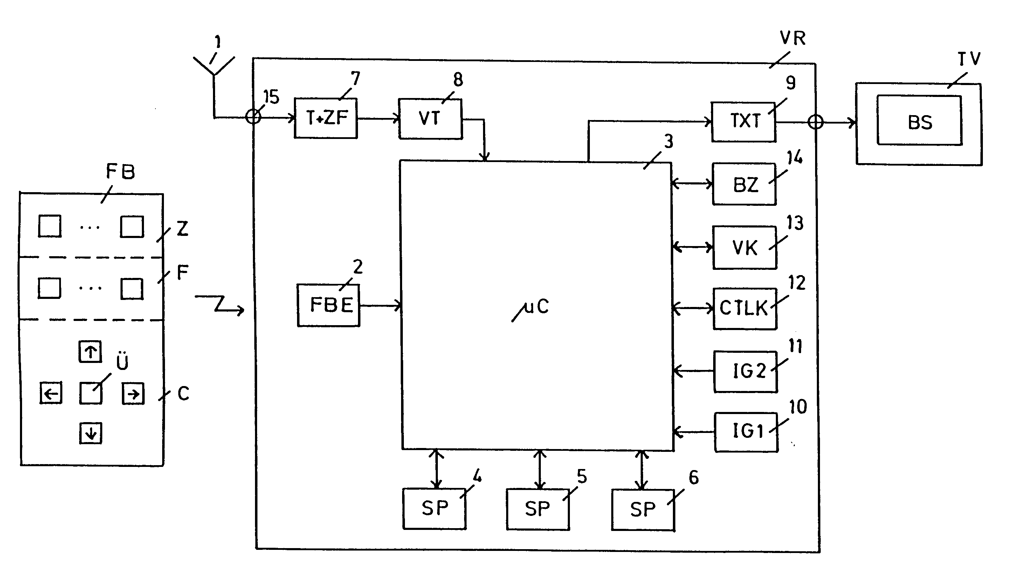

Die Figur zeigt einen an eine Antenne 1 oder eine Kabelübertragungsstrecke angeschlossenen Videorecorder VR mit einem Fernbedienungsgeber FB und einen an den Videorecorder angeschlossenen Fernsehempfänger TV mit einem Bildschirm BS.

Der Fernbedienungsgeber FB enthält einen Tastenblock Z zur Eingabe von alphanumerischen Zeichen, einen Tastenblock F mit Funktionstasten und einen Tastenblock C mit Tasten zur Cursorsteuerung und einer Übernahmetaste Ü.

Der Videorecorder VR enthält einen Fernbedienungsempfänger 2, einen Mikrocomputer 3, einen Programmierspeicher 4, einen Archivspeicher 5, einen Arbeitsspeicher 6, einen Tuner und ZF-Verstärker 7, einen Fernsehtextdecoder 8, einen Textbaustein 9, einen ersten Impulsgeber 10, einen zweiten Impulsgeber 11, einen Steuerspurmagnetkopf 12, Videoaufzeichnungs- und -wiedergabeköpfe 13 und einen Bandzähler 14.

Im folgenden wird die Funktionsweise der gezeigten Einrichtung beispielhaft erläutert.

Die Aufzeichnung eines Programmbeitrages auf eine erste Videokassette geschieht wie folgt:
Vor dem erstmaligen Einlegen der Kassette versieht der Benutzer die Kassette - beispielsweise mittels eines Aufklebers - mit einer laufenden Nummer. Beim erstmaligen Einlegen der Kassette übermittelt der Benutzer dem Mikrocomputer 3 des Videorecorders einmalig die Nummer der eingelegten Kassette unter Verwendung des alphanumerischen Tastenblocks Z des Fernbedienungsgebers FB. Unmittelbar nach dem Einlegen der Kassette in den Videorecorder aktiviert der Mikrocomputer 3 den (nicht gezeichneten) Bandantriebsmotor zur Durchführung eines Initialisierungslaufes Bei diesem Initialisierungslauf wird das Band kurzzeitig mit erhöhter Geschwindigkeit zurück- und vorgespult. Während dieses Umspulvorganges werden von den Wellen der beiden Bandwickel oder von der Welle eines Bandwickels und der Capstan-Welle mittels der Impulsgeber 10 und 11 Impulse abgeleitet, deren Anzahl pro Zeiteinheit von der Drehgeschwindigkeit der zugehörigen Welle abhängt, und dem Mikrocomputer 3 zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher 6 ab.

Anschließend folgt die Zwischenspeicherung des Titels der aufzuzeichnenden Sendung. Die Eingabe des Titels kann auf zwei Wegen geschehen. Ein erster Weg ist die manuelle Eingabe des Titels unter Verwendung des alphanumerischen Tastenblocks Z des Fernbedienungsgebers FB. Die zweite Möglichkeit der Titeleingabe besteht darin, den Videorecorder nach dem sog. VPT-Verfahren (Videorecorderprogrammierung über Teletext) zu programmieren und dabei den Titel der aufzuzeichnenden Sendung aus dem Fernsehtextsignal abzutrennen. Hierzu wird das empfangene Signal über den Eingang 15 des Videorecorders VR und einen Tuner und eine ZF-Stufe 7 einem Fernsehtextdecoder 8 zugeführt, an dessen Ausgang neben den für die automatische Aufzeichnung notwendigen Sendungsdaten auch der Titel zur Verfügung gestellt wird. Der auf einem der vorgenannten Wege eingegebene Titel wird ebenfalls im Arbeitsspeicher 6 zwischengespeichert.

Am Beginn der aufzuzeichnenden Sendung wird dem Aufzeichnungsvorgang gestartet. Bei diesem Aufzeichnungsvorgang werden auf grundsätzlich bekannte Weise mittels der Videoköpfe 13 die Videosignale in den Schrägspuren des Videomagnetbandes aufgezeichnet. Ferner werden während des Aufzeichnungsvorganges die mittels des Steuerspurmagnetkopfes 12 in der Steuerspur aufgezeichneten Steuerspurimpulse zur Aufzeichnung eines der Nummer der Kassette entsprechenden Signals impulsbreitenmoduliert aufgezeichnet. Während des Aufzeichnungsvorganges liefert der Bandzähler 14 ständig Informationen über den aktuellen Bandstand an den Mikrocomputer 3. Damit steht auch bei der Beendigung des Aufzeichnungsvorganges der Bandstand zur Verfügung. Dieser wird zusammen mit dem Bandstand des Anfangs der Sendung, dem Titel der Sendung, und ggf. der Nummer der eingelegten Kassette in einem der Kassette zugehörigen und von der Nummer der Kassette abhängigen Speicherbereich des Archivspeichers 5 abgelegt.

Auf ähnliche Weise erfolgt die Aufzeichnung weiterer Programmbeiträge auf dieselbe Kassette und die Aufzeichnung von Programmbeiträgen auf die weiteren Kassetten des Kassettenmagazins.

Die oben beschriebene Übermittlung der Kassettennummer an den Mikrocomputer 3 ist für jede Kassette nur ein einziges Mal notwendig, da bei jedem erneuten Einlegen der Kassette die zugehörige Nummer beispielsweise im Rahmen des Initialisierungslaufes durch Auswertung der impulsbreitenmoduliert aufgezeichneten Steuerspurimpulse automatisch erkannt werden kann.

Durch die beschriebenen Aufzeichnungsvorgänge sind im Archivspeicher 5 der Titel, der Anfangs- und Endbandstand und die Kassettennummer für jeden auf eine Kassette des Kassettenmagazins aufgezeichneten Programmbeitrag abgespeichert.

Ein Vorteil der oben beschriebenen Aufzeichnung der Kassettennummer in der Steuerspur des Magnetbandes besteht auch darin, daß dann, wenn bei eingelegter Kassette die Stromversorgung des Videorecorders - beispielsweise durch Ausschalten des Gerätes - unterbrochen wird, bei erneuter Inbetriebnahme des Recorders die Nummer der Kassette beispielsweise im Rahmen eines Initialisierungslaufes durch Auswertung der Steuerspurimpulse erkannt und das Inhaltsverzeichnis der eingelegten Kassette unmittelbar nach Beendigung des Initialisierungslaufes auf dem Bildschirm BS angezeigt werden kann.

Alternativ zu der oben beschriebenen Möglichkeit, den momentanen Bandstand mittels eines Initialisierungslaufes zu ermitteln, kann der momentane Bandstand auch dadurch erhalten werden, daß entweder in der CTL-Spur, einer eigenen Zeitcodespur oder in den Videoschrägspuren eine Zeitcodeinformation aufgezeichnet wird, welche bei jedem weiteren Einlegen der Kassette zur Verfügung steht und die gewünschte Information über den Bandstand liefert.

Alternativ zu der oben beschriebenen Möglichkeit, die Kassette vor dem erstmaligen Einlegen in den Videorecorder mit einer laufenden Nummer zu versehen und diese Nummer beim erstmaligen Einlegen der Kassette mittels der Bedientastatur dem Videorecorder zu übermitteln, kann die Numerierung der Kassette auch wie folgt geschehen: Die Kassette wird ohne vorherige Numerierung in den Videorecorder eingelegt. Der Mikrocomputer 3 aktiviert den Steuerspurkopf 12 - beispielsweise im Rahmen des Initialisierungslaufes - zur Abtastung der Steuerspur, um zu überprüfen, ob der eingelegten Kassette bereits eine Nummer zugeordnet ist oder nicht. Ist dies nicht der Fall, dann ordnet der Mikrocomputer 3 der eingelegten Kassette eine freie Nummer zu, steuert während des Aufzeichnungsvorganges den Steuerspurkopf 12 zur Aufzeichnung eines der Kassettennummer entsprechenden Signals durch Impulsbreitenmodulation der Steuerimpulse an und speichert das im Rahmen des Aufzeichnungsvorganges erstellte Inhaltsverzeichnis in einem der vergebenen Nummer zugeordneten Speicherbereich des Archivspeichers 5 ab. Nach dem Betätigen der Auswurftaste informiert der Mikrocomputer 3 über den Textbaustein 9 den Benutzer durch eine Klartextanzeige auf dem Bildschirm BS über die Nummer, die der Kassette vergeben wurde, so daß der Benutzer die Kassette - beispielsweise mittels eines Aufklebers - mit der vergebenen Nummer versehen kann.

Eine weitere vorteilhafte Ausgestaltung der Erfindung besteht darin, aus dem auf dem Bildschirm BS angezeigten Inhaltsverzeichnis bzw. aus den auf dem Bildschirm BS angezeigten Titeln mittels des Tastenblocks C des Fernbedienungsgebers FB einen bestimmten Beitrag anzuwählen und dann die Übernahmetaste Ü zu betätigen. Der Mikrocomputer 3 löst daraufhin einen schnellen Umspulbetrieb zu der Bandstelle aus, die dem Anfang des ausgewählten Beitrages entspricht. Ist die gewünschte Bandstelle erreicht, so wird die erste Szene des angewählten Beitrages beispielsweise in Form eines Standbildes auf dem Bildschirm BS angezeigt, um dem Benutzer das Erreichen der gewünschten Bandstelle anzuzeigen. Beispielsweise kann das genannnte Standbild unter Verwendung des nicht gezeichneten PIP (picture-in-picture)-Bausteines des Videorecordes als Kleinbild eingeblendet und die verbleibende Bildschirmfläche zur Anzeige von Titel, Kassettennummer, usw. verwendet werden. Alternativ zur Darstellung der ersten Szene des ausgewählten Beitrages als Standbild kann dem Benutzer das Erreichen der gewünschten Bandstelle auch durch die Einblendung des Titels des ausgewählten Beitrages am unteren Bildschirmrand angezeigt werden.

## Patentansprüche

1. Videorecorder mit einer Einrichtung zur Abspeicherung des Inhaltsverzeichnisses eines aus einer Vielzahl von Magnetbandkassetten bestehenden Kassettenmagazins, mit
- einer Bedientastatur,
- einem Mikrocomputer,
- einem Speicher zur Abspeicherung von Informationen über die örtliche Lage auf dem Magnetband und den Titel von Programmbeiträgen einer Vielzahl von numerierten Magnetbandkassetten, und
- einem Magnetkopf (12) zur Aufzeichnung von Nummern in der Steuerspur der Magnetbandkassetten,
**dadurch gekennzeichnet,**
daß der Mikrocomputer (3) nach dem Einlegen einer Magnetbandkassette den Magnetkopf (12) zur Abtastung der Steuerspur ansteuert um zu überprüfen, ob der eingelegten Magnetbandkassette in der Steuerspur bereits eine Nummer zugeordnet ist, und daß bei Nichtvorliegen einer Nummer der Magnetbandkassette vom Mikrocomputer (3) automatisch eine freie Nummer zugeordnet und in der Steuerspur aufgezeichnet wird.

2. Videorecorder nach Anspruch 1, **dadurch gekennzeichnet,** daß das der Nummer der Magnetbandkassette entsprechende Signal durch Impulsbreitenmodulation der Steuerspurimpulse während der gesamten Aufzeichnungsdauer aufgezeichnet wird.

3. Videorecorder nach Anspruch 1 oder 2 , **dadurch gekennzeichnet,** daß die Information über den Titel des Programmbeitrages mittels eines Fernsehtextdecoders (8) aus einem Fernsehtextsignal abgeleitet wird.

4. Videorecorder nach einem oder mehreren der vorhergehenden Ansprüche, **dadurch gekennzeichnet,** daß aus der auf dem Bildschirm (BS) dargestellten Übersicht mittels des Fernbedienungsgebers (FB) ein gewünschter Programmbeitrag ausgewählt wird, der Mikrocomputer (3) einen schnellen Umspulbetrieb zu einer dem Anfang des ausgewählten Programmbeitrages entsprechenden Bandstelle steuert und beim Erreichen dieser Bandstelle die Anzeige eines der ersten Szene des ausgewählten Programmbeitrages entsprechenden Standbildes auf dem Bildschirm (BS) initiert.

5. Videorecorder nach einem oder mehreren der Ansprüche 1-4, **dadurch gekennzeichnet,** daß aus der auf dem Bildschirm (BS) dargestellten Übersicht mittels des Fernbedienungsgebers (FB) ein gewünschter Programmbeitrag ausgewählt wird, der Mikrocomputer (3) einen schnellen Umspulbetrieb zu einer dem Anfang des ausgewählten Programmbeitrages entsprechenden Bandstelle steuert und beim Erreichen dieser Bandstelle die Anzeige des Titels des ausgewählten Programmbeitrages auf dem Bildschirm (BS) initiiert.

## Claims

1. Video recorder having a device for storing the list of contents of a cassette magazine consisting of a multiplicity of magnetic tape cassettes, having
- an operating keyboard,
- a microcomputer,
- a memory for storing information on the local position on the magnetic tape and the title of programme contributions of a multiplicity of numbered magnetic tape cassettes, and
- a magnetic head (12) for recording numbers on the control track of the magnetic tape cassettes,
characterized in that, after the insertion of a magnetic tape cassette, the microcomputer (3) activates the magnetic head (12) for scanning the control track in order to check whether a number has already been allocated to the inserted magnetic tape cassette on the control track, and in that, when a number is not present, a free number is automatically allocated to the magnetic tape cassette by the microcomputer (3) and recorded on the control track.

2. Video recorder according to Claim 1, characterized in that the signal corresponding to the number of the magnetic tape cassette is recorded by pulse-width modulation of the control track pulses during the entire recording period.

3. Video recorder according to Claim 1 or 2, characterized in that the information on the title of the programme contribution is derived from a teletext signal by means of a teletext decoder (8).

4. Video recorder according to one or more of the preceding claims, characterized in that, from the overview displayed on the screen (BS), a desired programme contribution is selected by means of the remote control transmitter (FB), the microcomputer (3) controls a fast rewinding operation to a tape position corresponding to the start of the selected programme contribution and, when this tape position is reached, initiates the display of a freeze frame corresponding to the first scene of the selected programme contribution on the screen (BS).

5. Video recorder according to one or more of Claims 1-4, characterized in that, from the overview displayed on the screen (BS), a desired programme contribution is selected by means of the remote control transmitter (FB), the microcomputer (3) controls a fast rewinding operation to a tape position corresponding to the start of the selected programme contribution and, when this tape position is reached, initiates the display of the title of the selected programme contribution on the screen (BS).

## Revendications

1. Magnétoscope comprenant un dispositif pour mémoriser la table des matières d'un magasin à cassettes constitué par une multiplicité de cassettes à bande magnétique, comportant
- un clavier de commande,
- un micro-ordinateur,
- une mémoire pour mémoriser des informations concernant la position locale sur la bande magnétique et le titre de parties du programme d'une multiplicité de cassettes à bande magnétique numérotées, et
- une tête magnétique (12) pour l'enregistrement de numéros sur la piste de commande des cassettes à bande magnétique,
caractérisé en ce qu'après l'insertion d'une cassette à bande magnétique, le micro-ordinateur (3) commande la tête magnétique (12) pour l'exploration de la piste de commande de manière à vérifier si déjà un numéro est associé, sur la piste de commande, à la cassette à bande magnétique insérée, et que dans le cas de l'absence d'un numéro de la cassette à bande magnétique, un numéro libre est associé automatiquement par le micro-ordinateur (3) et est enregistré sur la piste de commande.

2. Magnétoscope selon la revendication 1, caractérisé en ce que le signal, qui correspond au numéro de la cassette à bande magnétique, est enregistré au moyen d'une modulation en durée des impulsions de la piste de commande, pendant l'ensemble de la durée d'enregistrement.

3. Magnétoscope selon la revendication 1 ou 2, caractérisé en ce que l'information concernant le titre de la partie du programme est obtenue à partir d'un signal de texte de télévision, au moyen d'un décodeur de texte de télévision (8).

4. Magnétoscope selon une ou plusieurs des revendications précédentes, caractérisé par le fait qu'une partie désirée de programme est sélectionnée à partir de la vue d'ensemble représentée sur l'écran (BS), à l'aide d'un générateur de telécommande (SB), que le micro-ordinateur (3) commande une opération de rembobinage rapide jusqu'à une position de la bande, qui correspond au début de la partie sélectionnée du programme, et que, lorsque cette position de la bande est atteinte, l'affichage d'une image fixe, qui correspond à la première scène de la partie sélectionnée du programme, sur l'écran (BS) est déclenché.

5. Magnétoscope selon une ou plusieurs des revendications 1-4, caractérisé en ce qu'une partie désirée du programme est sélectionnée à partir de la vue d'ensemble représentée sur l'écran (BS), à l'aide du générateur de télécommande (FB), que le micro-ordinateur (3 ) commande un fonctionnement rapide de rembobinage jusqu'à un point de la bande qui correspond au début de la partie sélectionnée du programme et que lorsque ce point de la bande est atteint, l'affichage du titre de la partie sélectionnée du programme sur l'écran (BS) est déclenché.
